# EUROPEAN PATENT SPECIFICATION

(11) **EP 2 300 777 B1**
(45) Date of publication and mention of the grant of the patent: **24.07.2013**
(21) Application number: 08774117.9
(22) Date of filing: 18.06.2008
(51) Int. Cl.: G01B 5/12, G01B 5/00, G01B 21/14

(54) **CYLINDER DIAMETER MEASUREMENT**
ZYLINDERDURCHMESSERMESSUNG
MESURE DE DIAMÈTRE DE CYLINDRE

(43) Date of publication of application: 30.03.2011
(73) Proprietor: Chris-Marine AB, 200 39 Malmö (SE)
(72) Inventor: SVENSSON, Per, S-231 32 Trelleborg (SE)
(74) Representative: Bergstrand, Mikael Gudmundsson
(86) International application number: PCT/EP2008/057662
(87) International publication number: WO 2009/152851

(56) References cited:
- EP-A- 1 887 311
- WO-A-99/15853
- US-A- 4 307 514

## Description

### Technical field

The present invention relates to a measuring device, use of said measuring device and a method for measuring a diameter of a cylinder in an engine.

### Background art

In order to optimise the operational conditions of marine engines and to prevent shutdowns to the largest extent possible, the operational state of the engines is checked at regular intervals. One common cause for impaired engine state or for shutdowns is that the piston rings have become worn-out or burnt and consequently need to be replaced. Experience has shown, however, that the cause may equally well be the cylinder liners which, when examined, have been found to be in a worn state or to no longer exhibit a smooth surface because of depositions of soot or of abrasive or corrosive attacks on the cylinder liner walls. Attacks of this kind might be due to sulphurous fuel used to operate the engine, which in combination with steam produces sulphuric acid that condenses at predetermined temperature and pressure levels in the engine. The effects on the cylinder from the abrasive or corrosion attacks are localised because of the uneven distribution of cylinder oil, of gas leakage via openings, such as passages between piston rings and cylinder liner, and/or variations of the cylinder wall temperature.

Cylinder liner checks have hitherto been made entirely manually. The preliminary work, preceding the measuring operation as such, is comparatively extensive. Initially, the cylinder head of the engine must be dismantled before an operator may enter the cylinder, using a ladder which is lowered into the cylinder. In addition, a ruler having pre-punched holes therein is inserted vertically into the cylinder alongside the inner wall of the cylinder liner. With the aid of a measuring rod, a number of different diameter measurements, usually about ten, are taken vertically in the fore-and-aft as well as in the thwart ships directions.

In this manner it is possible to make an as a rule incomplete evaluation of the state of the cylinder liner as concerns the amount of soot deposition and the number of abrasive or corrosion damages and their size. However, this method is completely insufficient when one wishes to determine any deviations in the cylinder liner from the cylindrical shape, i.e. to determine whether the heat stress or other damage, to which the cylinder liner has been exposed has caused the liner to deform, resulting in the liner adopting an oval shape or a trumpet shape with a larger diameter in the top end.

WO 99/15853 discloses a device for determining the internal measurements of a cylinder liner. Primarily large-size cylinder liners are concerned, such as those used in marine or on power station engines. The device comprises a suspension unit which is arranged to be placed above an essentially vertically upright cylinder liner. The device further comprises a measuring unit which is arranged to be lowered from the suspension unit into the cylinder liner and which is provided with means for performing a series of measuring operations and determining distances from a line of reference extending between the suspension unit and the measuring unit to the inner wall of the cylinder liner at a plurality of levels and in several different radial directions at each level.

EP 1887311 discloses a method for measuring the micro structure of the surfaces of cylinder drill hoes and a measuring device for performing the measuring method.

US 4307514 discloses an apparatus for measuring the bore diameter of a hollow member whose bore diameter can change in the axial direction. The bore diameter measuring apparatus includes a probe portion, means for inserting the probe portion in the bore, and means for converting a signal supplied thereto by the probe to a bore diameter indication. The probe portion has a housing structure, a plurality of legs which are radially expandable relative to the housing structure, means for radially displacing the legs, and means for measuring the axial displacement of the radial displacing means.

There are problems associated with the device described above and prior art. In order to obtain measurements of a cylinder using the devices available today one must dismantle several engine parts before arranging a measuring device in the cylinder or before a person climbs into the cylinder performing said measurements.

### Summary of the invention

It is an object of the present invention to provide an improvement of the above techniques and prior art. More particularly, it is an object of the present invention to provide a measuring device and a method for measuring a diameter of a cylinder in an engine without having to dismantle engine parts, such as a cylinder cover and exhaust valve body.

These and other objects as well as advantages that will be apparent from the following description of the present invention are achieved by a measuring device and a method for measuring a diameter of a cylinder according to independent claims 1 and 9.

A measuring device is provided for measuring a diameter of a cylinder in an engine. The measuring device is characterised in that the measuring device comprises a measuring rack, the measuring rack further comprising at least two rack supports, wherein each rack support has an inner end, said inner ends being connected to each other. The measuring device further comprises a rotatable measuring holder adapted to rotate in a plane which is perpendicular to a central axis of the cylinder, the rotatable measuring holder further comprising at least one measuring unit, wherein said measuring unit is adapted to provide a measurement in said plane and substantially radially with regard to the cylinder, wherein said measuring rack and said rotatable measuring holder are attached to each other, and said rotatable measuring holder is rotatable relative to said measuring rack, and wherein said measuring device is adapted to enter the cylinder through a hole in a cylinder wall by being formed into a long narrow measuring device. This is advantageous in that said device is flexible and can be adapted to fit different profiles when being placed and fixated within the cylinder.

The measuring device is adapted to enter the cylinder through a hole in a cylinder wall by being formed into a long narrow measuring device, which is advantageous in that engine parts, such as the cylinder head and exhaust valve body, do not have to be dismantled to place the measuring device within the cylinder.

The rotation motor may be mounted within the measuring rack, which is advantageous in more sufficient handling.

The rotation motor may be mounted within the rotatable measuring holder, which is advantageous in more sufficient handling.

The measuring rack and the rotatable measuring holder may be detachable from each other. This is advantageous in that different rotatable measuring holders may be used carrying different kinds of measuring units, i.e. the measuring holder may be replaced while still using the same measuring rack. However, the other way around is also possible.

The measuring device may be arranged for use in engines with a cylinder diameter of at least 300 mm, which is advantageous in that diameters within major cylinders may be measured.

The measuring device may be arranged for use in a diesel engine, which is advantageous in that diameters within major cylinders in diesel engines may be measured.

Each of the rack supports has an outer end, wherein a ball bearing may be mounted on the outer end of at least one rack support.

Each of the rack supports has an outer end, wherein a slide bearing may be mounted on the outer end of at least one rack support. This is advantageous in that the measuring unit will be slidably mounted within the cylinder. Also, this feature helps to centre the measuring device in relation to the cylinder.

At least one of the rack supports may comprises a rack motor, and an inner rack support, movably mounted within said at least one rack support, and adapted to move in said plane and substantially radially with regard to the cylinder by means of said rack motor. This is advantageous in that the measuring unit is movable in said plane and may be fixated to the cylinder walls by means of said rack motor.

At least two of the rack supports may be connected to an operating device configured to move the outer ends of said at least two rack supports apart from each other in said plane, which is advantageous in that the measuring device may be adapted to constitute different shapes.

The operating device may be a thread rod, which is advantageous in that the rack supports may be manually operated.

The operating device may be a motor, which is advantageous in that the rack supports may be moved by said motor from a distance.

At least two of the rack supports may be lockable in different angular positions in said plane, which is advantageous in that the measuring device may be locked and fixated when constituting different shapes.

The measuring rack may further comprise a sensor configured to indicate an altitude along a normal to said plane. This is advantageous in that the position of the measuring device with respect to the normal to said plane will be known. This makes it possible to compensate the measurements for unevenness of the piston.

The rotatable measuring holder may further comprise a temperature sensor, which is advantageous in that the temperature will be known. This makes it possible to compensate the measurements for varying temperatures.

The rotatable measuring holder may further comprise means for calibration of the measuring unit, which is advantageous in that calibration of the measuring unit can be conducted at all times to secure the accuracy of the measurement.

The rotatable measuring holder may further comprise a sensor configured to indicate an altitude along a normal to said plane. This is advantageous in that the position of the measuring device with respect to the normal to said plane will be known. This makes it possible to make measurements in different altitudes within the cylinder.

The rotatable measuring holder may further comprise a camera, which is advantageous in that a visualisation may be presented to an operator. Thus, visual inspection of the cylinder will be possible.

The camera may comprise a light source, which is advantageous in that it gives the camera better light and thereby improves the visualisation.

The rotatable measuring holder may further comprise an accumulator package and electronics.

The measuring rack may further comprise an accumulator package and electronics. This is advantageous in that the measuring device is provided with electricity.

The measuring unit may be a laser device, which is advantageous in that fast and accurate measurements can be executed.

The measuring unit may be a probe, which is advantageous in that fast and accurate measurements can be executed.

The measuring device may further comprise a sled, wherein the sled and the probe are attached to each other and movably mounted within said rotatable measuring holder and adapted to move in said plane and substantially radially with regard to the cylinder. This is advantageous in that fast and accurate measurements can be executed.

The rotatable measuring holder may further comprise a measuring motor adapted to move the sled and the measuring unit in said plane and substantially radially with regard to the cylinder. This is advantageous in that the measuring unit is movable in said plane by means of said measuring motor.

The probe may further comprise a resilient tip, which is advantageous in that this makes the probe more flexible and less sensitive to impingement.

A method is provided for measuring a diameter of a cylinder in an engine. The method is characterised in that the method comprises applying a said measuring device through a hole in a cylinder wall to a piston located within the cylinder the diameter of which is to be measured, fixing the measuring device in relation to the cylinder, positioning a rotatable measuring holder attached to the measuring device in an initial position, defining a zero position of the rotatable measuring holder, starting the measurement, registering at least one measured value, sending said at least one measured value to a control unit, rotating the rotatable measuring holder in said plane to a new position at an angular position from the zero position, repeating the steps of registering, sending, and rotating a plurality of times, calculating, based on the at least one measured value, at least one diameter value of a cylinder in the control unit, and presenting the at least one diameter value of the cylinder on a display screen. This is advantageous in that said method may be used for retrieving measurements from big cylinders with different profiles. Also, this method is applicable for measuring other types of arrangements.

The method may further comprise moving at least one measuring unit attached to the measuring holder in a plane which is perpendicular to a central axis of the cylinder and substantially radially with regard to the cylinder, from an initial position towards a wall of the cylinder, until a tip of the measuring unit is in contact with the wall of the cylinder, and moving the measuring unit back to the initial position, and wherein repeating also comprises moving the measuring unit from and back to an initial position. This is advantageous in that fast and accurate measurements can be executed.

Sending the first measured value to the control unit may be executed through wireless transmission, which is advantageous in that no cables are necessary.

Sending the first measured value to the control unit may be executed through a cable.

Applying the measuring device to a piston located within the cylinder the diameter of which is to be measured may be executed through a hole in a cylinder wall. This is advantageous in that engine parts, such as the cylinder head and exhaust valve body, do not have to be dismantled to place the measuring device within the cylinder.

### Brief description of the drawings

The above, as well as additional objectives, features and advantages of the present invention will be better understood through the following illustrative and non limiting detailed description of embodiments of the present invention, with reference to the appended drawings.
Fig 1, as well as Fig. 2, is a perspective view of a measuring device for measuring a diameter of a cylinder in an engine,
Fig 3 is a perspective view of the measuring device arranged within a cylinder for measuring its diameter,
Fig 4 is a perspective view of a system for measuring a diameter of a cylinder in an engine according to the present invention,
Fig 5 is a perspective view of the measuring device in a shape adapted to fit through a hole in a cylinder wall in order to enter the cylinder.

### Detailed description of preferred embodiments of the invention

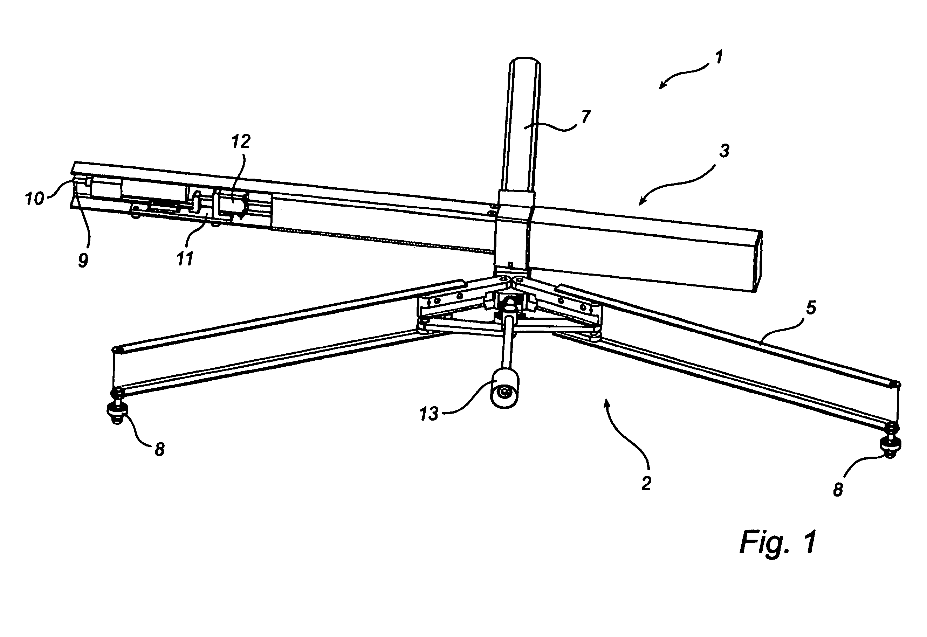

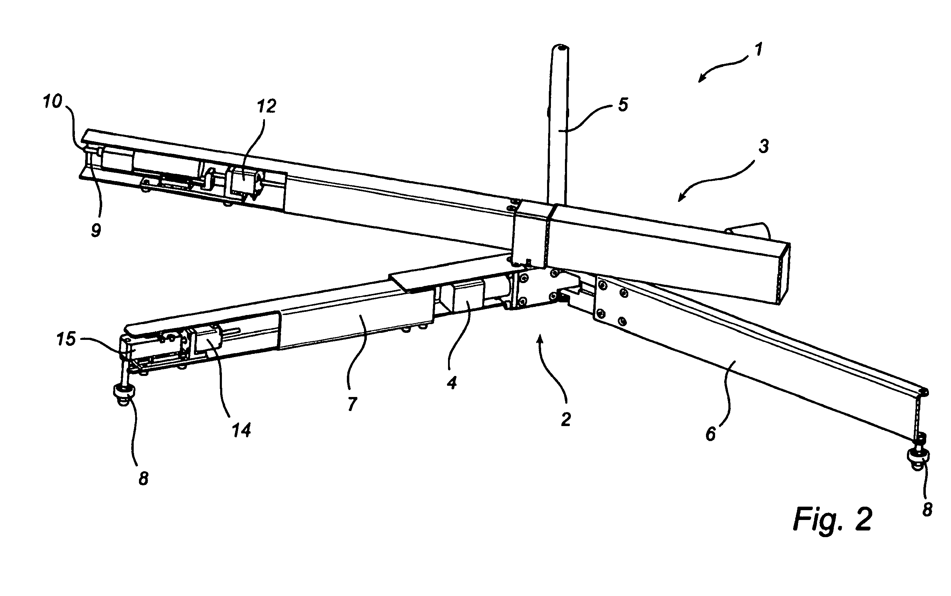

A measuring device 1 for measuring a diameter of a cylinder in an engine is illustrated in Fig 1, as well as Fig. 2. The measuring device 1 has a measuring rack 2, a rotatable measuring holder 3 and a rotation motor 4. The measuring rack 2 and the rotatable measuring holder 3 are detachably attached to each other. The measuring rack 2 has three rack supports 5, 6, 7, wherein the inner ends of the rack supports 5, 6, 7 are connected to each other. A slide bearing 8 is arranged on each outer end of the rack supports 5, 6, 7. The rotatable measuring holder 3 is rotatable in a plane perpendicular to a central axis of the cylinder which is to be measured by the measuring device 1. The rotatable measuring holder 3 has a probe 9 with a resilient tip 10, a sled 11 and a measuring motor 12 arranged within the rotatable measuring holder 3. The sled 11 and probe 9 are connected to each other and can move in said plane and substantially radially with regard to the cylinder by means of the measuring motor 12. The rotation motor 4, which is placed within the rotatable measuring holder 3, can rotate the rotatable measuring holder 3 relative to the measuring rack 2 in said plane. Further, the measuring device 1 comprises an operating device 13, which consists of a threaded rod, connected to two rack supports 5, 6 and able to move the outer ends of said two rack supports 5, 6 apart from each other in said plane. One rack support 7 comprises a rack motor 14 and an inner rack support 15, movably mounted within the rack support 7. The inner rack support 15 can move in said plane and substantially radially with regard to the cylinder by means of the rack motor 14.

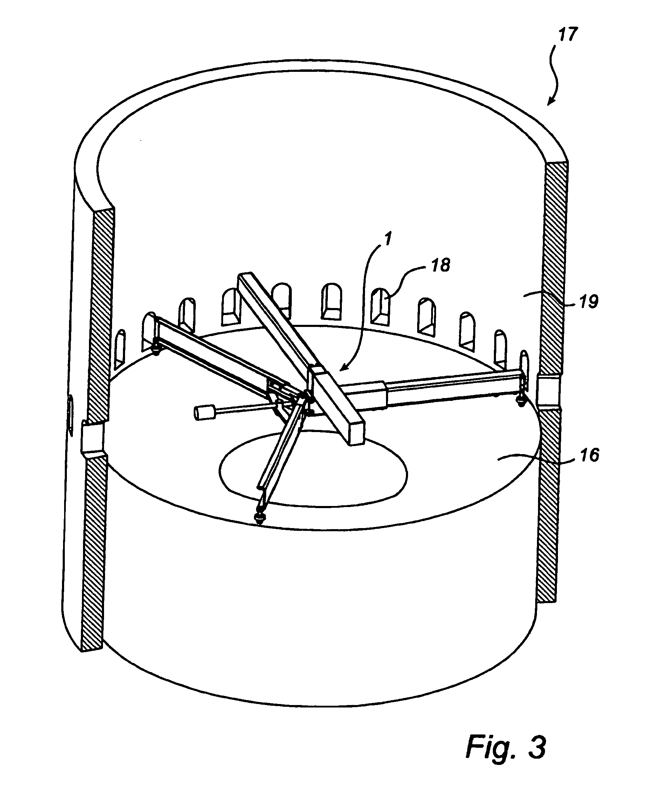

Fig 3 illustrates a measuring device 1 arranged on a piston 16 within the cylinder 17 which is to be measured. The measuring device 1 is arranged within the cylinder 17 through a hole 18 in the cylinder wall 19.

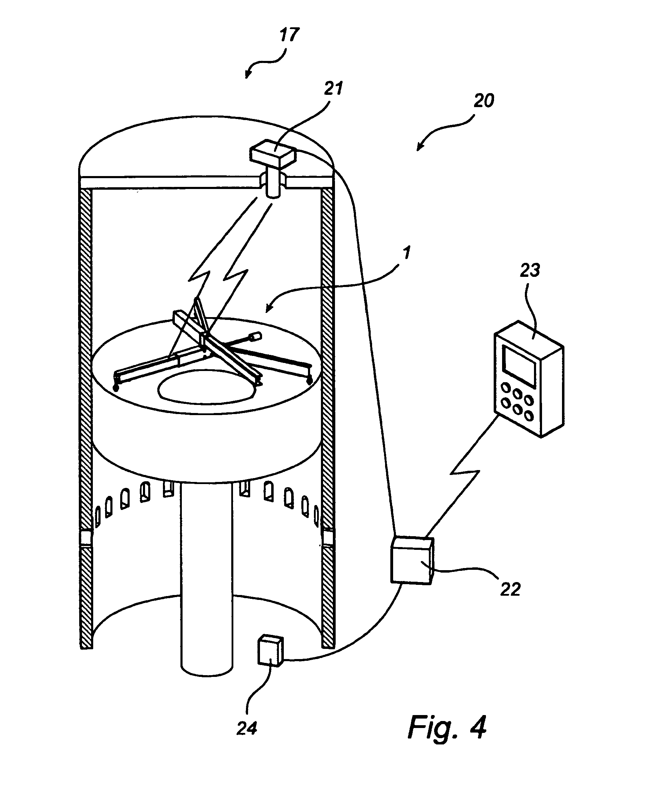

In Fig 4 a system 20 for measuring a diameter of a cylinder 17 in an engine is illustrated. The system 20 comprises the measuring device 1, a transmitter/receiver 21, a control unit 22, a hand unit 23 and a position sensor 24. The measuring device 1 is wirelessly connected to the transmitter/receiver 21 which is connected to the control unit 22. The hand unit 23 and the position sensor are also connected wireless or by cable to the control unit 22.

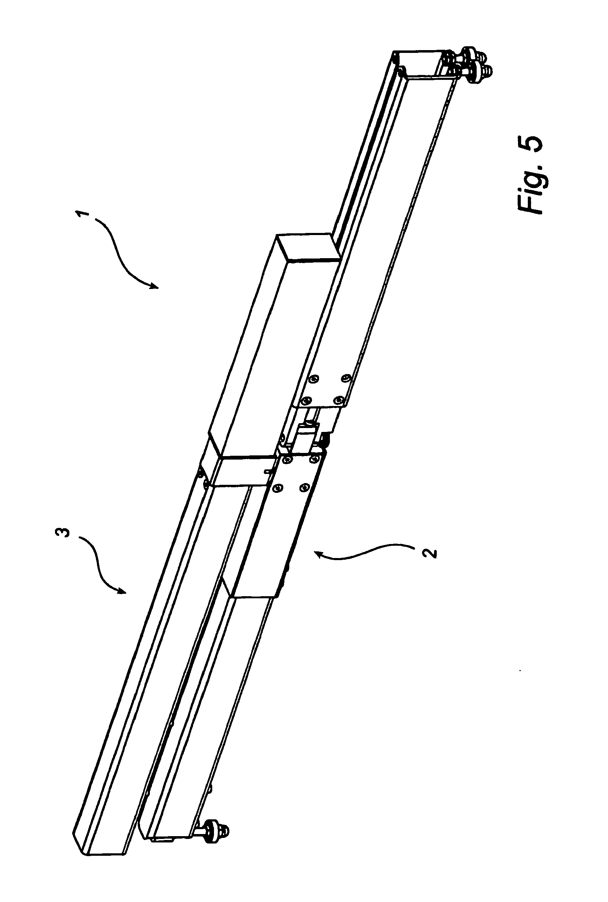

When measuring a diameter of a cylinder 17 the measuring device 1 is placed within the cylinder 17 on the piston 16 of the cylinder 17. This is carried out by entering the measuring device 1 through a hole 18 in the cylinder wall 19 when the piston 16 is positioned at the bottom of the cylinder 17. Thus, in this step the measuring device 1 is adapted to fit through a small hole 18 in the cylinder wall 19, i.e. the rack supports 5, 6 are brought together by the operating device 13 and their outer ends are at an angle of 180 degrees relative the third rack support 7. Further, the longitudinal direction of the rotatable measuring holder 3 is adjusted to correspond to the longitudinal direction of the measuring rack 2, forming a long narrow measuring device 1 according to Fig 5. However, the measuring device 1 may be placed on the piston 16 of the cylinder 17 in other ways, e.g. by removing engine parts and placing the measuring device 1 on the piston 16 from above. Also, the measuring rack 2 and the rotatable measuring holder 3 may be placed within the cylinder 17 separately and attached when inside the cylinder 17.

When the measuring device is applied to the piston 16 within the cylinder 17, the measuring device 1 is to be fixed in relation to the cylinder 17. The outer ends of the rack supports 5, 6 are moved apart until a satisfying angular distance arises between the three rack supports 5, 6, 7, e.g. an angular distance of 120 degrees between the rack supports 5, 6, 7. The rack supports 5, 6, 7 may then be locked in the position. However, the rack support is also lockable in other different angular positions. The measuring device 1 is then fixed against the cylinder wall 19 by means of the rack motor 14 in the rack support 7. The rack motor 7 moves the inner rack support 15 in said plane and substantially radially with regard to the cylinder 17 towards and against the cylinder wall 19, thereby moving the entire measuring device 1, until each slide bearing 8 on each outer end of the rack supports 5, 6, 7 are in contact with the cylinder wall 19, thereby fixating the measuring device 1 in relation to the cylinder 17.

The rotatable measuring holder 3 is now put in an initial position and a zero position of said rotatable measuring holder 3 is defined. At this time, the measurements can start. The rotatable measuring holder 3 is now rotated into different positions and makes a measurement on each position. The measurements are made by moving the sled 11 in the rotatable measuring holder 3, in said plane and substantially radially with regard to the cylinder 17, towards the cylinder wall 19, by means of the measuring motor 12, until the resilient tip 10 of the probe 9 is in contact with the cylinder wall 19 making a measurement. When the measurement has been registered, the sled 11 moves back to its initial position and the registered measurement is sent to a control unit 22. Also, the probe 9 can be in permanent contact with the cylinder wall 19 during the measurements. In this case the rotatable measuring holder 3 rotates from the zero position continuously until it has rotated a predetermined amount of degrees, e.g. 360 degrees back to the zero position, making measurements along the way. The registered measurement can be sent to the control unit 22 through wireless transmission or through a cable. The rotatable measuring holder 3 is now rotated to a new position at an angular position from the zero position, where a new measurement is registered and sent to the control unit 23. This measuring process can be repeated until a sufficient number of measurements have been registered and sent to the control unit 22. Finally, a number of cylinder diameters, based on the number of registered measurements, can be calculated in the control unit 22 and presented on a display screen on the hand unit 23. Of course, the display screen may be positioned elsewhere, not necessary on a hand unit.

The measuring unit may also be constituted by a laser unit, and since the rotatable measuring holder 3 may be detachably arranged to the measuring rack, the measuring unit can be switched when desired. However, when a laser unit is used, basically the same measuring method as described above is used. Although, the probe 9, sled 11 and the measuring motor 12 are of course excessive when using a laser unit. Instead of moving the sled 11 towards the cylinder wall 19 until the resilient tip 10 of the probe 9 is in contact with the cylinder wall 19, the laser unit makes the measurement by sending a laser beam against the wall.

Obviously, the measuring device 1 may be arranged and modified in many different ways. The rotation motor 4 may be placed on or within the measuring rack 2 or the rotatable measuring holder 3. The measuring rack 2 may comprise any number of rack supports, e.g. two or four. The slidable bearings 8 may be replaced with any bearings of known kind, e.g. ball bearings. Also, the operating device 13 may be of any known kind, e.g. a threaded rod or some sort of motor. A sensor may be placed on or within the measuring rack 2 or the rotatable measuring holder 3. Also, a sensor can be placed somewhere within the cylinder 17 independent of the measuring device 1 or outside the cylinder 17. The sensor is configured to indicate an altitude along a normal to said plane in order to determine where in the cylinder 17 the measurements are executed. Further, a warning signal may be issued if the indicated altitude exceeds a predetermined value. The measuring device 1 may have a temperature sensor arranged on or within the measuring rack 2 or the rotatable measuring holder 3, said temperature sensor being used to compensate the registered measurements for varying temperatures. The measuring rack 2 can according to the above fixate the measuring device 1 in cylinders 17 with different diameters by means of the rack motor 7. Another possibility is to adapt the measuring rack 2 manually or by some other known control means in order to fit different cylinder diameters. Also, different sizes of the measuring rack 2 may be produced to fit different cylinder diameters. The rotatable measuring holder 3 is also adaptable to different cylinder diameters. The measuring rack 2 or measuring holder 3 may comprise an accumulator package and electronics. In one embodiment, the accumulator package and electronics serve as a counterweight to the measuring holder 3. Even though the measuring device 1 is primarily intended for major cylinders with an inner diameter of at least 300 mm, it is also applicable on cylinders with an inner diameter below 300 mm.

The skilled person realises that a number of modifications of the embodiments described herein are possible without departing from the scope of the invention, which is defined in the appended claims.

## Claims

1. A measuring device (1) for measuring a diameter of a cylinder (17) in an engine, **characterised in that** the measuring device (1) comprises:
• a measuring rack (2), the measuring rack (2) further comprising at least two rack supports (5, 6, 7), wherein each rack support (5, 6, 7) has an inner end, said inner ends being connected to each other; and
• a rotatable measuring holder (3) adapted to rotate in a plane which is perpendicular to a central axis of the cylinder (17), the rotatable measuring holder (3) further comprising at least one measuring unit (9), wherein said measuring unit (9) is adapted to provide a measurement in said plane and substantially radially with regard to the cylinder (17);
wherein said measuring rack (2) and said rotatable measuring holder (3) are attached to each other, and said rotatable measuring holder (3) is rotatable relative to said measuring rack (2), and wherein said measuring device (1) is adapted to enter the cylinder (17) through a hole (18) in a cylinder wall (19) by being formed into a long narrow measuring device (1).

2. The measuring device (1) according to claim 1, wherein the measuring rack (2) and the rotatable measuring holder (3) are detachable from each other.

3. The measuring device (1) according to any of the preceding claims, wherein the measuring device (1) is arranged for use in engines with a cylinder diameter of at least 300 mm.

4. The measuring device (1) according to any of the preceding claims, wherein the measuring device (1) is arranged for use in a diesel engine.

5. The measuring device (1) according to any of the preceding claims, wherein each of the rack supports (5, 6, 7) has an outer end, wherein a ball bearing is mounted on the outer end of at least one rack support (5, 6, 7).

6. The measuring device (1) according to any of the preceding claims, wherein each of the rack supports (5, 6, 7) has an outer end, wherein a slide bearing (8) is mounted on the outer end of at least one rack support (5, 6, 7).

7. The measuring device (1) according to any one of the preceding claims, wherein the measuring unit is a laser device.

8. Use of a measuring device (1) according to any one of claims 1-7 for measuring a diameter of a cylinder (17) in an engine.

9. A method for measuring a diameter of a cylinder (17) in an engine, **characterised** i n that the method comprises
applying the measuring device (1) according to claim 1 through a hole (18) in a cylinder wall (19) to a piston (16) located within in the cylinder (17) the diameter of which is to be measured,
fixing the measuring device (1) in relation to the cylinder (17), positioning a rotatable measuring holder (3) attached to the measuring device (1) in an initial position,
defining a zero position of the rotatable measuring holder (3), starting the measurement,
registering at least one measured value,
sending said at least one measured value to a control unit (22), rotating the rotatable measuring holder (3) in said plane to a new position at an angular position from the zero position,
repeating said registering, sending, and rotating a plurality of times, calculating, based on the at least one measured value, at least one diameter value of a cylinder in the control unit (22), and
presenting the at least one diameter value of the cylinder (17) on a display screen.

10. The method according to claim 9, wherein said method further comprises
moving at least one probe (9) attached to the rotatable measuring holder (3) in a plane which is perpendicular to a central axis of the cylinder (17) and substantially radially with regard to the cylinder (17), from an initial position towards a cylinder wall (19), until a tip (10) of the probe (9) is in contact with the cylinder wall (19), and
moving the probe (9) back to the initial position, and
wherein repeating also comprises moving the probe (9) from and back to an initial position.

## Patentansprüche

1. Messgerät (1) zum Messen eines Durchmessers eines Zylinders (17) in einem Motor, **dadurch gekennzeichnet, dass** das Messgerät (1) Folgendes umfasst:
• einen Messrahmen (2), wobei der Messrahmen (2) ferner mindestens zwei Rahmenträger (5, 6, 7) umfasst, wobei jeder Rahmenträger (5, 6, 7) ein inneres Ende aufweist, wobei die inneren Enden miteinander verbunden sind;
• einen drehbaren Messhalter (3), der ausgelegt ist, sich in einer Ebene zu drehen, die senkrecht zu einer Mittelachse des Zylinders (17) ist, wobei der drehbare Messhalter (3) ferner mindestens eine Messeinheit (9) umfasst, wobei die Messeinheit (9) ausgelegt ist, eine Messung in der Ebene und im Wesentlichen radial in Bezug auf den Zylinder (17) bereitzustellen; und
wobei der Messrahmen (2) und der drehbare Messhalter (3) aneinander befestigt sind und der drehbare Messhalter (3) relativ zum Messrahmen (2) drehbar ist, wobei das Messgerät (1) ausgelegt ist, dadurch durch ein Loch (18) in einer Zylinderwand (19) in den Zylinder (17) einzudringen, dass es zu einem langen schmalen Messgerät (1) geformt ist.

2. Messgerät (1) nach Anspruch 1, wobei der Messrahmen (2) und der drehbare Messhalter (3) voneinander lösbar sind.

3. Messgerät (1) nach irgendeinem der vorhergehenden Ansprüche, wobei das Messgerät (1) zur Verwendung in Motoren mit einem Zylinderdurchmesser von mindestens 300 mm konfiguriert ist.

4. Messgerät (1) nach irgendeinem der vorhergehenden Ansprüche, wobei das Messgerät (1) zur Verwendung in einem Dieselmotor konfiguriert ist.

5. Messgerät (1) nach irgendeinem der vorhergehenden Ansprüche, wobei jeder der Rahmenträger (5, 6, 7) ein äußeres Ende aufweist, wobei auf dem äußeren Ende mindestens eines Rahmenträgers (5, 6, 7) ein Kugellager angebracht ist.

6. Messgerät (1) nach irgendeinem der vorhergehenden Ansprüche, wobei jeder der Rahmenträger (5, 6, 7) ein äußeres Ende aufweist, wobei auf dem äußeren Ende mindestens eines Rahmenträgers (5, 6, 7) ein Gleitlager (8) angebracht ist.

7. Messgerät (1) nach einem der vorhergehenden Ansprüche, wobei die Messeinheit ein Lasergerät ist.

8. Verwendung eines Messgeräts (1) nach einem der Ansprüche 1-9 zum Messen eines Durchmessers eines Zylinders (17) in einem Motor.

9. Verfahren zum Messen eines Durchmessers eines Zylinders (17) in einem Motor, **dadurch gekennzeichnet, dass** das Verfahren Folgendes umfasst:
Aufbringen des Messgeräts (1) nach Anspruch 1 durch ein Loch (18) in einer Zylinderwand (19) auf einen Kolben (16), der sich innerhalb des Zylinders (17) befindet, dessen Durchmesser zu messen ist,
Fixieren des Messgeräts (1) in Relation zum Zylinder (17),
Positionieren eines drehbaren Messhalters (3), der am Messgerät (1) befestigt ist, in einer Anfangsstellung,
definieren einer Nullstellung des drehbaren Messhalters (3),
Starten der Messung,
Registrieren mindestens eines gemessenen Wertes,
Senden des mindestens einen gemessenen Wertes an eine Steuereinheit (22),
Drehen des drehbaren Messhalters (3) in der Ebene in eine neue Stellung in einer winkligen Stellung von der Nullstellung,
mehrmaliges Wiederholen des Registrierens, Sendens und Drehens,
Berechnen mindestens eines Durchmesserwertes eines Zylinders in der Steuereinheit (22) basierend auf dem mindestens einen gemessenen Wert und
Darstellen des mindestens einen Durchmesserwertes des Zylinders (17) auf einem Anzeigebildschirm.

10. Verfahren nach Anspruch 9, wobei das Verfahren ferner umfasst:
Bewegen mindestens eines Messgebers (9), der am drehbaren Messhalter (3) befestigt ist, in einer Ebene, die senkrecht zu einer Mittelachse des Zylinders (17) ist, und im Wesentlichen radial in Bezug auf den Zylinder (17) aus einer Anfangsstellung auf die Zylinderwand (19) zu, bis eine Spitze (10) des Messgebers (9) in Berührung mit der Zylinderwand (19) ist, und
Bewegen des Messgebers (9) zurück in die Anfangsstellung, und wobei Wiederholen auch Bewegen des Messgebers (9) aus einer Anfangsstellung und in sie zurück umfasst.

## Revendications

1. Dispositif de mesure (1) pour mesurer le diamètre d'un cylindre (17) dans un moteur, **caractérisé en ce que** le dispositif de mesure (1) comprend :
• un tiroir de mesure (2), le tiroir de mesure (2) comprenant au moins deux supports de tiroir (5, 6, 7), chaque support de tiroir (5, 6, 7) présentant une extrémité intérieure, lesdites extrémités intérieures étant reliées l'une à l'autre ;
• un support de mesure rotatif (3) adapté pour tourner dans un plan qui est perpendiculaire à un axe central du cylindre (17), le support de mesure rotatif (3) comprenant en outre au moins une unité de mesure (9), ladite unité de mesure (9) étant adaptée pour fournir une mesure dans ledit plan et essentiellement radialement par rapport au cylindre (17) ;
ledit tiroir de mesure (2) et ledit support de mesure rotatif (3) étant fixés l'un à l'autre, et ledit support de mesure rotatif (3) pouvant tourner par rapport audit tiroir de mesure (2), dans lequel ledit dispositif de mesure (1) est adapté pour pénétrer le cylindre (17) par un orifice (18) dans une paroi du cylindre (19) en étant formé en un long dispositif de mesure étroit (1).

2. Dispositif de mesure (1) selon la revendication 1, dan lequel le tiroir de mesure (2) et le support de mesure rotatif (3) peuvent être séparés l'un de l'autre.

3. Dispositif de mesure (1) selon l'une quelconque des revendiations précédentes, dans lequel le dispositif de mesure (1) est agencé pour être utilisé dans des moteurs avec un diamètre de cylindre d'au moins 300 mm.

4. Dispositif de mesure (1) selon l'une quelconque des revendications précédentes, dans lequel le dispositif de mesure (1) est agencé pour être utilisé dans un moteur diesel.

5. Dispositif de mesure (1) selon l'une quelconque des revendications précédentes, dans lequel chacun des supports de tiroir (5, 6, 7) présente une extrémité extérieure, un roulement à billes étant monté sur l'extrémité extérieure d'au moins un support de tiroir (5, 6, 7).

6. Dispositif de mesure (1) selon l'une quelconque des revendications précédentes, dans lequel chacun des supports de tiroir (5, 6, 7) présente une extrémité extérieure, un palier lisse (8) étant monté sur l'extrémité extérieure d'au moins un support de tiroir (5, 6, 7).

7. Dispositif de mesure (1) selon l'une quelconque des revendications précédentes, dans lequel l'unité de mesure est un dispositif laser.

8. Dispositif de mesure (1) selon l'une quelconque des revendications 1 à 9 pour mesurer le diamètre d'un cylindre (17) dans un moteur.

9. Procédé pour mesurer le diamètre d'un cylindre (17) dans un moteur, **caractérisé en ce que** le procédé comprend
l'application du dispositif de mesure (1) de la revendication 1, à travers un trou (18) dans une paroi de cylindre (19) vers un piston (16) situé à l'intérieur du cylindre (17) dont le diamètre doit être mesuré,
la fixation du dispositif de mesure (1) par rapport au cylindre (17),
le positionnement d'un support de mesure rotatif (3) fixé au dispositif de mesure (1) dans une position initiale,
la définition d'une position zéro du support de mesure rotatif (3),
le commencement de la mesure,
l'enregistrement d'au moins une valeur mesurée,
l'envoi de ladite au moins une valeur mesurée à une unité de commande (22),
la rotation du support de mesure rotatif (3) dans ledit plan vers une nouvelle position à une position angulaire de la position zéro,
la répétition desdits enregistrement, envoi et rotation une pluralité de fois,
le calcul, basé sur l'au moins une valeur calculée, d'au moins une valeur de diamètre d'un cylindre dans l'unité de commande (22), et
la présentation de l'au moins une valeur de diamètre du cylindre (17) sur un écran d'affichage.

10. Procédé selon la revendication 9, dans lequel ledit procédé comprend en outre
le déplacement d'au moins une sonde (9) fixée au support de mesure rotatif (3) dans un plan qui est perpendiculaire à un axe central du cylindre (17) et essentiellement radialement par rapport au cylindre (17), d'une position initiale vers une paroi de cylindre (19), jusqu'à ce qu'un embout (10) de la sonde (9) soit en contact avec la paroi de cylindre (19), et
le retour de la sonde (9) à sa position initiale et
dans lequel la répétition comprend également le déplacement de la sonde (9) depuis et vers une position initiale.
